# EUROPÄISCHE PATENTSCHRIFT

(11) **EP 2 418 532 B1**
(45) Veröffentlichungstag und Bekanntmachung des Hinweises auf die Patenterteilung: **14.08.2019**
(21) Anmeldenummer: 11004719.8
(22) Anmeldetag: 09.06.2011
(51) Int. Cl.: G02B 21/00, G01N 21/64

(54) **Verfahren zum Trennen von Detektionssignalen im Strahlengang einer optischen Einrichtung**
Method for separating detection signals in the beam of an optical device
Procédé de séparation de signaux de détection dans le sens des rayons d'un dispositif optique

(30) Priorität: 13.08.2010 DE 102010034367; 04.10.2010 DE 102010047237
(43) Veröffentlichungstag der Anmeldung: 15.02.2012
(73) Patentinhaber: Leica Microsystems CMS GmbH, 35578 Wetzlar (DE)
(72) Erfinder: Schreiber, Frank, 72574 Bad Urach (DE)
(74) Vertreter: Patent- und Rechtsanwälte Ullrich & Naumann

(56) Entgegenhaltungen:
- WO-A1-02/16911
- WO-A1-93/19358
- WO-A2-2004/065944
- DE-A1- 10 038 080
- DE-A1-102008 018 475
- US-A- 5 792 051
- URAYAMA P ET AL: "A UV-visible-NIR fluorescence lifetime imaging microscope for laser-based biological sensing with picosecond resolution", APPLIED PHYSICS B: LASERS AND OPTICS, SPRINGER INTERNATIONAL, BERLIN, DE, Bd. B76, Nr. 5, 1. Januar 2003 (2003-01-01), Seiten 483-496, XP002289222, ISSN: 0946-2171
- MARQUES NOVO J B ET AL: "OPTIMIZATION OF A BOXCAR INTEGRATOR/AVERAGER SYSTEM FOR EXCITED-STATE LIFETIME MEASUREMENTS", APPLIED SPECTROSCOPY, THE SOCIETY FOR APPLIED SPECTROSCOPY. BALTIMORE, US, Bd. 46, Nr. 5, 1. Mai 1992 (1992-05-01), Seiten 852-859, XP000266337, ISSN: 0003-7028, DOI: 10.1366/0003702924124637

## Beschreibung

Die Erfindung betrifft ein Verfahren zum Trennen von Detektionssignalen im Strahlengang einer optischen Einrichtung, wobei unterschiedliche Signale in definierter zeitlicher Folge entstehen.

Es handelt sich hier ganz allgemein um ein Verfahren zum Trennen von Detektionssignalen im Strahlengang einer optischen Einrichtung, ungeachtet der konkreten Anwendung/Verwendung. Wesentlich dabei ist, dass Detektionssignale unterschiedlicher Herkunft und Qualität in zeitlicher Folge entstehen. Bei der optischen Einrichtung kann es sich beispielsweise um ein Fluoreszenzmikroskop handeln, insbesondere um ein konfokales Laser-Mikroskop. Biologische Proben werden zur Nutzung der Fluoreszenzmikroskopie mit entsprechenden Farbstoffen markiert. Diese Farbstoffe werden üblicherweise mit Laserlicht zu Emission angeregt. Zum Zwecke der Bildaufnahme wird das Fluoreszenzlicht detektiert.

Nachteilig sind Reflexionen, die unmittelbar an der Probenoberfläche und beim Übergang des Anregungslichts von einem optischen Medium zum anderen, beispielsweise von Luft nach Glas oder umgekehrt, entstehen. Letztendlich entsteht hier störendes Streulicht.

Des Weiteren ist problematisch, dass das Fluoreszenzlicht ca. 1 Million Mal schwächer ist als das anregende Laserlicht.

Daher ist es zur Bildgebung essentiell, das reflektierte Anregungslicht bzw. Streulicht und Fluoreszenzlicht bzw. deren Signale möglichst effizient von einander zu trennen.

An dieser Stelle sei angemerkt, dass es hier grundsätzlich um das Trennen von Detektionssignalen im Strahlengang einer optischen Einrichtung geht und die Fluoreszenzmikroskopie lediglich beispielhaft genannt ist. Das erfindungsgemäße Verfahren lässt sich somit immer dann anwenden, wenn es um die Trennung von "gemischten" Detektionssignalen geht, die in definierter zeitlicher Folge entstehen.

Aus der Praxis sind unterschiedliche Verfahren bekannt, um bei dem zuvor genannten Beispiel, d.h. in der Fluoreszenzmikroskopie, das Anregungs-/Streulicht vom zur Bildgebung oder Auswertung benötigten Fluoreszenzlicht, d.h. deren Signale, zu trennen. Dazu werden Strahlteiler oder akustooptische Elemente im Detektionsstrahlengang verwendet. Die Unterscheidbarkeit von Anregungs-/Streulicht und Fluoreszenzlicht durch deren gegeneinander verschobene Wellenlängen werden genutzt. Dabei ist wesentlich, dass das Fluoreszenzlicht üblicherweise eine größere Wellenlänge als das Streulicht besitzt.

Auch ist es in der Praxis bereits üblich, die unerwünschten Reflexionen durch eine Antireflexbeschichtung auf optischen Bauteilen, insbesondere auf Gläsern, zu minimieren. Durch diese - passive - Maßnahme lässt sich der Anteil des reflektierten Lichts von wenigen Prozent auf wenige Zehntel Prozent reduzieren. Dies ist jedoch nicht hinreichend.

Des Weiteren ist es aus der Praxis bekannt, das unerwünschte Reflexionslicht durch optische Notch-Filter zu unterdrücken. Diese Filter nutzen ebenso die Verschiebung der Wellenlängen bei Reflexions-/Streulicht und Fluoreszenzlicht. Unter Nutzung der Notch-Filter erreicht die Unterdrückung des Reflexions-/Streulichts eine optische Dichte von bis zu 8 und mehr, wobei eine optische Dichte von 7 einer Transmission von etwa 0,00001 % entspricht. Gleichzeitig liegt die Transmission des Fluoreszenzlichts bei bis über 99 %.

Im Lichte der voranstehenden Ausführungen ist es unter Nutzung der aus der Praxis bekannten Methoden möglich, bei feststehenden Anregungswellenlängen das störende Reflexions-/Streulicht vom dem interessierenden Fluoreszenzlicht effizient zu trennen. Werden jedoch Systeme mit mehreren definierten Laserlinien verwendet, bei denen sequenziell oder sogar simultan mit mehreren Wellenlängen angeregt wird, sind die zuvor genannten Verfahren unzureichend. Dies ist darauf zurückzuführen, dass Reflexionssignale im Fluoreszenzband der Farbstoffe liegen können. Eine Filterung bzw. Trennung führt in diesem Falle zu Verlusten von Fluoreszenzsignalen. Außerdem würden hier Kombinationen von Notch-Filtern bzw. Strahlteilern benötigt werden. Dies erhöht die Kosten einer entsprechenden Einrichtung ganz erheblich. Außerdem ist die Effizienz bei eng zusammenliegenden Linien regelmäßig unzureichend.

Nachteile ergeben sich insbesondere bei der Anwendung sogenannter Weißlichtlaser, deren zunehmender Einsatz darauf zurückzuführen ist, dass deren Wellenlänge in einem bestimmten Bereich, beispielsweise im Bereich zwischen 470 nm und 670 nm, beliebig einstellbar ist. Eine variable und dabei effiziente Unterdrückung des Reflexions-/Streulichts lässt sich nach derzeitigem Stand der Technik nicht realisieren, zumal es bislang Notch-Filter ausschließlich für feste bzw. definierte Wellenlängen gibt.

Die DE 100 38 080 A1 beschreibt ein Verfahren und eine Vorrichtung zum ortsaufgelösten fluoreszenzoptischen Nachweis von auf einer Oberfläche eines Biochips immobilisierten Substanzen. Dabei wird eine Zeitverzögerung zwischen dem Triggersignal, das einen Anregungslichtpuls auslöst, und dem Messintervall genutzt, um Anregungslicht und Fluoreszenzlicht nicht nur spektral mit Hilfe von geeigneten Filtern, sondern auch zeitlich zu unterscheiden.

Der vorliegenden Erfindung liegt daher die Aufgabe zugrunde, ein Verfahren zum Trennen von Detektionssignalen im Strahlengang einer optischen Einrichtung anzugeben, wonach mit einfachen apparativen Mitteln eine hinreichend gute Trennung definierbarer Detektionssignale bzw. definierbarer Bereiche der Detektionssignale bei guter Effizienz der interessierenden Teilsignale möglich ist.

Die voranstehende Aufgabe ist durch die Merkmale des Patentanspruchs 1 gelöst. Danach baut das gattungsbildende Verfahren auf einer besonderen Situation auf, wonach nämlich im Strahlengang einer optischen Einrichtung unterschiedliche Signale in definierter zeitlicher Folge entstehen. Das erfindungsgemäße Verfahren ist dadurch gekennzeichnet, dass auf Grundlage der bekannten oder ermittelbaren/feststellbaren zeitlichen Folge eine Unterdrückung oder Separierung von Signalen erfolgt, so dass die interessierenden getrennten Signale mit hinreichend guter Effizienz für weitere Zwecke nutzbar sind.

Noch einmal sei angemerkt, dass es hier grundsätzlich um die Trennung von Detektionssignalen geht, basierend auf der zeitlichen Abfolge ihrer Entstehung. Dabei spielt es zunächst keine Rolle, wodurch die zeitliche Abfolge der Detektionssignale hervorgerufen wird. Auch spielt es keine Rolle, zu welchem Zweck die Trennung bzw. Separierung der Signale erfolgt.

Im Gegensatz zu den aus der Praxis bekannten Methoden wird hier zeitabhängig gearbeitet, nämlich in Kenntnis oder durch Ermittlung der zeitlichen Folge der unterschiedlichen Signale.

Grundsätzlich kann es sich bei den Detektionssignalen um Signale jedweder Art handeln. Es gibt zahlreiche konkrete Anwendungen, wonach es sich bei den Detektionssignalen um Fluoreszenzlicht und Reflexionslicht/Streulicht handelt, wobei dort das Problem der Separierung im Lichte der voranstehenden Ausführungen von ganz besonderer Bedeutung ist.

Entsprechend kann nach dem erfindungsgemäßen Verfahren eine zur Emission von Fluoreszenzlicht geeignete Probe mit gepulstem Anregungslicht angeregt werden, so dass aufgrund der gepulsten Anregung eine definierte zeitliche Abfolge von Fluoreszenzlicht und Reflexions-/Streulicht zu erwarten ist. Jedenfalls wird Fluoreszenzlicht aus der Probe emittiert und Reflexions-/Streulicht wird an der Probe und an bzw. in der Optik gestreut. Sowohl Fluoreszenzsignale als auch Reflexionssignale entstehen in einer zeitlich definierten Abfolge zum Puls des Anregungslichts, so dass die Trennung von Fluoreszenzlicht und Anregungslicht auf Grundlage der zeitlichen Abfolge der Signale, d.h. durch zeitliche Separierung, erfolgen kann.

Die Fluoreszenzsignale lassen sich zu unterschiedlichsten Anwendungen nutzen. So können die Fluoreszenzsignale zu Messungen genutzt werden, beispielsweise im Rahmen der Fluoreszenz-Korrelations-Spektroskopie (FKS). Im Rahmen einer solchen Anwendung werden aus Fluktuationen in der Fluoreszenzintensität Informationen gewonnen. Es werden beispielsweise Diffusionskonstanten, Konzentrationen und Bindungen zwischen verschieden diffundierenden Spezies gemessen. Ein konfokales Fluoreszenzmikroskop kommt hier zur Anwendung.

Ebenso können die Fluoreszenzsignale zur Fluoreszenz-Lebenszeit-Mikroskopie (FLIM-Technik) genutzt werden, nämlich unter Verwendung ionensensitiver Fluoreszenzfarbstoffe. Hier geht es um die Messung intrazellulärer lonenkonzentrationen in der Probe. Man nutzt dabei die Erkenntnis, dass sich die Fluoreszenz-Lebenszeit, die mittlere Verweildauer der Elektronen im angeregten Zustand, mit der lonenkonzentration ändert.

In ganz besonders vorteilhafter Weise lassen sich die separierten bzw. bereinigten Fluoreszenzsignale zur Bildgebung nutzen, insbesondere bei der vorzugsweise konfokalen Fluoreszenzmikroskopie. Hier geht es um eine hochauflösende Bildgebung unter Nutzung der Emissionsfähigkeit farbstoffdotierter Proben.

Grundsätzlich kann zur Anwendung des erfindungsgemäßen Verfahrens eine Anordnung realisiert sein, insbesondere bei der Fluoreszenzmikroskopie, wonach das Fluoreszenzlicht und das Reflexionslicht im Detektionsstrahlengang, d.h. von der Fluoreszenzprobe über die Optik kommend, auf einen Detektor trifft. Dort auftreffende Photonen werden in elektrische Signale gewandelt und lassen sich in einem nachgeschalteten Intregrator aufintegrieren bzw. aufaddieren und zur Bildgebung Bildpunkten zuordnen. So unterscheidet sich das erfindungsgemäße Verfahren durch den Stand der Technik dadurch, dass nach dem Detektor, insbesondere zwischen dem Detektor und dem Integrator, die Reflexionssignale separiert bzw. herausgefiltert werden. Wie bereits zuvor ausgeführt, erfolgt das Herausfiltern bzw. Separieren in zeitlicher Abfolge, nämlich in Kenntnis der zeitlichen Folge der Fluoreszenzsignale und der Reflexions-/Streulichtsignale.

In ganz besonders vorteilhafter Weise kann das Herausfiltern bzw. Trennen der Reflexionssignale von den Fluoreszenzsignalen über ein Gate erfolgen, dessen Funktion zu den Pulsen des Anregungslichts synchronisiert ist. Mit anderen Worten dienen die Pulse des Anregungslichts zur Ansteuerung des die Trennung bzw. das Herausfiltern bewirkenden Bauteils, wobei es grundsätzlich möglich ist, nicht benötigte oder störende Signale, beispielsweise Reflexionssignale, komplett herauszufiltern oder aber unterschiedliche Signale voneinander zu trennen, um diese beispielsweise unabhängigen Integratoren zuzuführen.

Zur Synchronisation kann ein besonderes Synchronisationssignal dienen, welches direkt am Lasertreiber abgegriffen wird. Ebenso ist es denkbar, das Detektionsignal unmittelbar oder mittelbar zu ermitteln, beispielsweise über einen Detektor, insbesondere über eine schnelle Fotodiode. Dies geschieht unmittelbar am Anregungslicht bzw. an einem Bruchteil des Anregungslichts. Letztendlich wird am bzw. im Anregungslicht gemessen.

In weiter vorteilhafter Weise wird das Gating-Signal auf das Fluoreszenzsignal zeitlich kalibriert, um nämlich eine eindeutige Signalauswahl und Zuordnung der anschließenden Detektion realisieren zu können. Die Kalibrierung des Gating-Signals kann auf ganz besonders einfache Weise durch Anpassung der Kabellänge zwischen Laser bzw. einer Fotodiode und dem Gate oder einer Weiche erfolgen. Insoweit ist der Begriff "Gating-Signal" im weitesten Sinne zu verstehen, nämlich ganz allgemein in Bezug auf die Ansteuerung einer die Trennung bzw. das Ausfiltern bewerkstelligenden Einrichtung.

Auch ist es denkbar, dass das Gating-Signal durch eine vorzugsweise variable elektronische Verzögerung des Synchronisationssignals kalibriert wird, nämlich unter Nutzung einer entsprechenden elektronischen Einrichtung. Eine solche zeitliche Kalibrierung des Gating-Signals lässt sich applikativ individuell einstellen, nämlich unter Nutzung einer entsprechenden Elektronik.

Zusätzlich oder alternativ ist es auch denkbar, dass durch den Benutzer oder automatisiert das elektronische Synchronisationssignal mittels einer Software verändert wird. Dies kann im Rahmen einer Optimierung erfolgen.

Grundsätzlich ist es denkbar, dass mit einem einzigen Synchronisationssignal ein Detektor oder zwei bzw. mehrere Detektoren angesteuert werden. Insbesondere dann, wenn unterschiedliche Signale - auf unterschiedlichen Wegen - weiter verarbeitet werden sollen, ist es von Vorteil, wenn mindestens zwei Synchronisationssignale bereitgestellt werden, um mindestens zwei Detektoren mit unterschiedlichem Detektionslicht zu versorgen bzw. die für die jeweiligen Detektoren bestimmten Signale, und nur diese, auch tatsächlich rauszufiltern bzw. zu trennen und den Detektoren zuzuleiten.

Für das erfindungsgemäße Verfahren ist es in Bezug auf die Fluoreszenzmikroskopie von Bedeutung, dass die Lichtquelle pulsierend arbeitet. Dabei ist es von weiterem Vorteil, wenn als Lichtquelle eine alternierend pulsierende Lichtquelle verwendet wird, um nämlich Detektionssignale unterschiedlicher Art und Qualität erzeugen zu können. Die erforderlichen Synchronisationssignale lassen sich entsprechend den voranstehenden Ausführungen abgreifen bzw. erzeugen.

Bereits eingangs ist ausgeführt worden, dass die Verwendung von Weißlichtlasern den Vorteil in sich birgt, dass deren Wellenlänge in einem bestimmten Bereich nahezu beliebig eingestellt werden kann. Folglich bietet der Weißlichtlaser den enormen Vorteil einer Flexibilität in der Anregung, in dem man nämlich mit unterschiedlichen Wellenlängenbereichen beleuchten bzw. anregen kann.

Außerdem ist es von Vorteil, wenn mit mehreren definierten Laserlinien sequenziell oder simultan angeregt wird, so dass auch insoweit eine maximale Flexibilität der das Verfahren nützenden Einrichtung gewährleistet ist.

Zur Detektion der Licht-Signale, beispielsweise des Fluoreszenzsignals bei der Fluoreszenzmikroskopie, werden Photon Counting Detektoren verwendet. Zusätzlich lassen sich Photomultiplier verwenden. Beliebige Arten von Detektoren sind entsprechend dem konkreten Bedarf einsetzbar.

Als Detektoren lassen sich auch Avalanche Photodioden (APDs) verwenden.

Erfindungsgemäß erfolgt das Triggern des Gating Signals auf einer Flanke des Photon-Counting-Signals.

Außerdem ist die Verwendung eines Constant Fraction Discriminators möglich, um eine von der Signalhöhe unabhängige zeitliche Triggerung, insbesondere bei Verwendung von PMTs, zu erreichen.

Eine variable Einstellung der Gating-Dauer ist zur optimalen Anpassung an die jeweilige Applikation ebenfalls möglich und insoweit von besonderem Vorteil.

Anstelle eines Gates kann eine Weiche verwendet werden, um nämlich die Signale zu separieren statt zu unterdrücken. So lassen sich Reflexionssignale von Fluoreszenzsignalen oder unterschiedliche Farben bei alternierender Anregung separieren.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausgestaltungen der Erfindung anhand der Zeichnung zu verweisen. In Verbindung mit der Erläuterung der bevorzugten Ausgestaltungen der Erfindung anhand der Zeichnung werden auch im Allgemeinen bevorzugte Ausgestaltungen und Weiterbildungen der Lehre erläutert. In der Zeichnung zeigen
- Fig. 1: in einem schematischen Diagramm die sich periodisch wiederholende zeitliche Abfolge von detektiertem Reflexionssignal und Fluoreszenzsignal in einem Konfokalmikroskop und
- Fig. 2: in schematischen Diagrammen untereinander die sich periodisch wiederholende zeitliche Signalabfolge gemäß Fig. 1, den Verlauf des Steuersignals für das Gating und das Ausgangssignal des Gates und
- Fig. 3: in einer schematischen Ansicht das Zusammenwirken der funktionalen Elemente einer optischen Einrichtung, die nach dem erfindungsgemäßen Verfahren arbeitet.

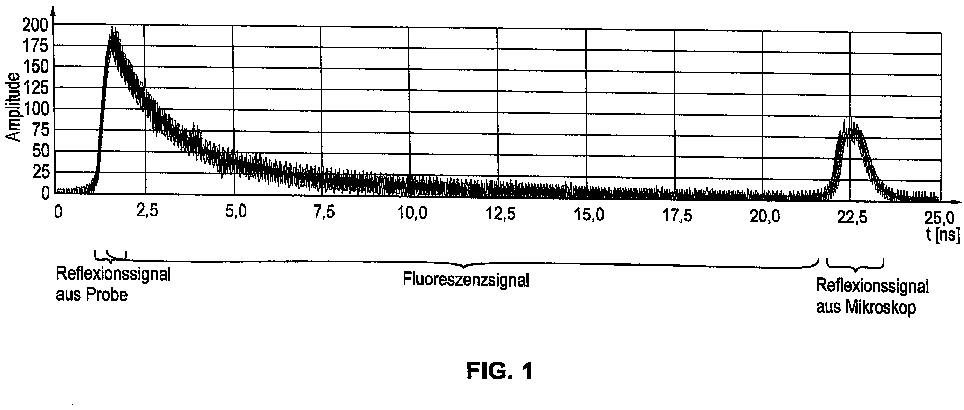

Fig. 1 zeigt in einem schematischen Diagramm die sich periodisch wiederholende zeitliche Abfolge des jeweils detektierten Reflexions-/Streulichtsignals und des Fluoreszenzsignals, wie diese Signale in einem konfokalen Fluoreszenzmikroskop in Erscheinung treten. Das Diagramm ist selbstredend. Es beginnt mit dem Reflexionssignal aus der Probe. Danach schließt sich das kontinuierlich über die Zeitdauer hinweg abflachende Fluoreszenzsignal an und schließt sich danach ein Reflexionssignal aus dem Mikroskop an, wobei dieses als Vorpuls zum nächsten Hauptpuls bzw. Reflexionssignal zu verstehen ist. Letztendlich handelt es sich hier um eine fortlaufende Darstellung mit periodisch wiederkehrender Abfolge.

Für die Darstellung in Fig. 1 ist wesentlich, dass sowohl das Fluoreszenzsignal als auch das Reflexionssignal einen zeitlich festen Abstand zum Anregungslaserpuls hat. Folglich ist es möglich, in erfindungsgemäßer Weise aufgrund der bekannten oder ermittelbaren bzw. feststellbaren zeitlichen Folge der jeweiligen Pulse eine Unterdrückung oder Separierung der jeweiligen Signale vorzunehmen, und zwar ungeachtet der Tatsache, ob es sich hier konkret um Reflexionssignale und Fluoreszenzsignale bei der konfokalen Fluoreszenzmikroskopie handelt oder um sonst wie definierte unterschiedliche Signale, die sich zeitlich separieren lassen.

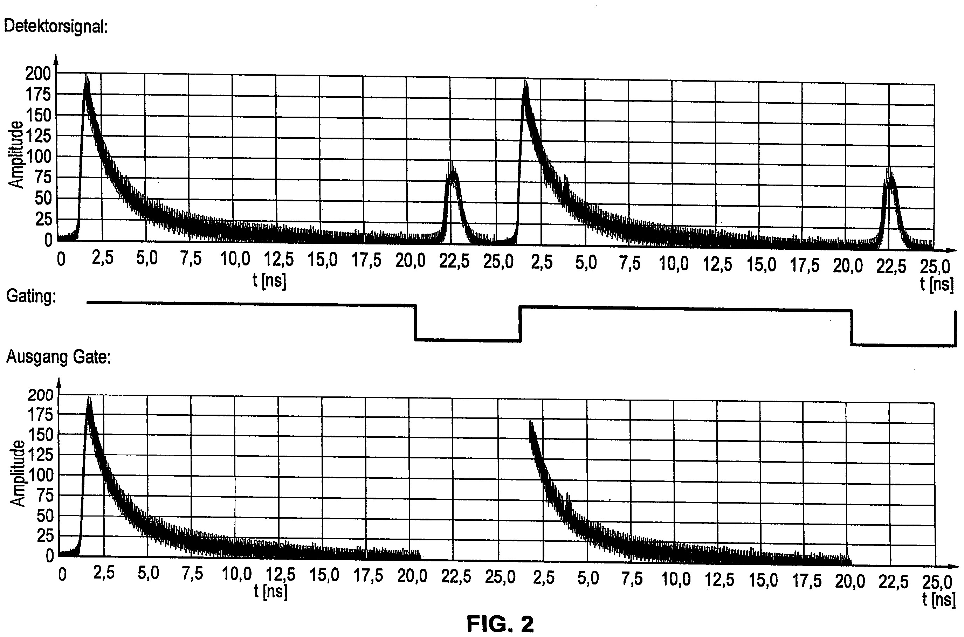

Fig. 2 zeigt im oberen Diagramm die sich periodisch wiederholende zeitliche Abfolge gemäß Fig. 1 mit zwei Perioden. Es handelt sich letztendlich um das Detektionssignal. Aus dem Detektionssignal resultierende elektrische Signale werden entsprechend einem Steuersignal gegatet. Dieses Signal, verantwortlich für das Gating, ist im Diagramm darunter gezeigt.

Entsprechend dem realisierten Gating, unter Zugrundelegung eines beispielsweise unmittelbar am Anregungslicht ermittelten Synchronisationssignals, lässt sich am Gate ein Ausgang definieren, wie er in dem unteren Diagramm dargestellt ist, wonach nämlich nur noch der Fluoreszenzanteil bzw. das Fluoreszenzsignal mit seiner abklingenden Kurve verbleibt.

Noch einmal sei an dieser Stelle angemerkt, dass neben der Reflexionsunterdrückung durch Gating auch andere Anwendungen in Verbindung mit der erfindungsgemäßen Lehre möglich ist. So lassen sich beispielsweise alternierende Lichtquellen, beispielsweise mit einem roten und einem blauen Laser im abwechselnden pulsenden Betrieb, in hervorragender Weise kombinieren, wobei die jeweiligen Fluoreszenzsignale voneinander trennbar sind. So lassen sich zwei Signale unabhängig voneinander mit nur einem Detektor detektieren. Anstelle das Signal zu bestimmten Zeiten durch Gating zu unterdrücken, werden hier die Signale über eine Weiche zeitlich abhängig auf zwei Integratoren verteilt.

Sich übersprechende Signale lassen sich reduzieren. So regt ein gewisser Anteil von zum Beispiel blauem Laserlicht neben dem blauen Farbstoff zusätzlich den roten Farbstoff an und umgekehrt. Bei bestimmten Applikationen wirkt sich dieser Effekt störend auf die Messergebnisse aus. Durch zeitliches Gating der Detektionssignale ist es möglich, den Detektoren neben den Wellenlängen auch den Laserpuls zuzuordnen. Dies würde bedeuten, dass ein für das rote Licht verantwortlicher Detektor zeitlich "blind" für diejenigen Fluoreszenzsignale ist, die von dem zeitlich versetzt pulsenden blauen Laser erzeugt werden, und umgekehrt. Beliebige weitere Anwendungen sind denkbar.

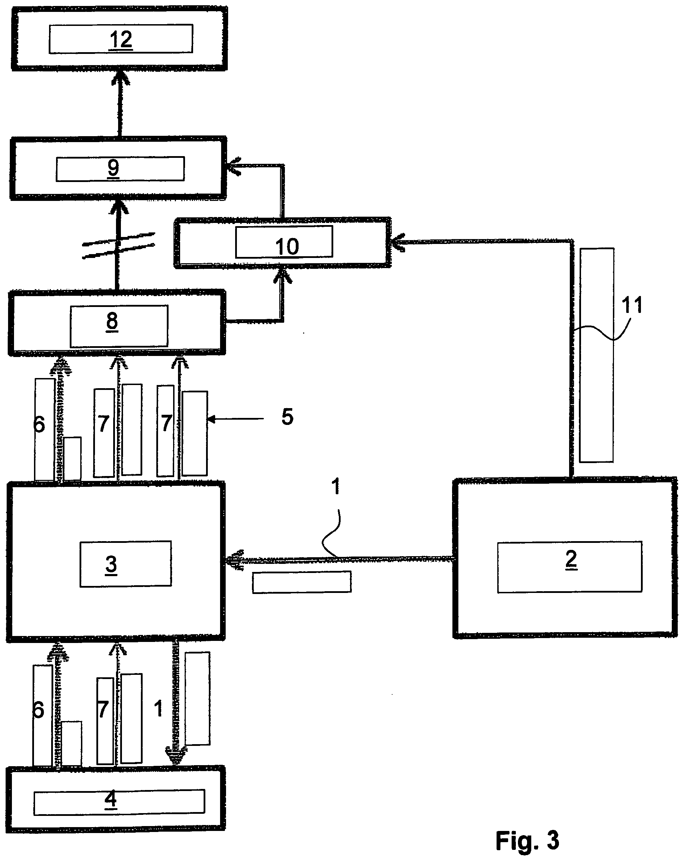

Fig. 3 zeigt in einer schematischen Darstellung den grundsätzlichen Aufbau und die Funktionsweise einer optischen Einrichtung, die das erfindungsgemäße Verfahren nutzt.

Das zur Fluoreszenzanregung dienende Laserlicht 1 wird über einen gepulsten Laser 2 zur Verfügung gestellt. Das als Anregungs-/Beleuchtungslicht dienende Laserlicht 1 gelangt über eine geeignete Optik 3 zur Probe 4, wobei es sich dabei um eine biologische Probe handeln kann. Die Probe 4 ist mit fluoreszierenden Farbstoffen markiert. Entsprechend regt das Laserlicht 1 die in der Probe 4 befindlichen Fluoreszenzfarbstoffe zur Lichtemission an. Das zurückkehrende Licht, nachfolgend der Einfachheit halber Detektionslicht 5 genannt, umfasst zum einen das aus der Emission der Fluoreszenzfarbstoffe resultierende Fluoreszenzlicht 6 und zum anderen Reflexionslicht 7 aus der Probe 4. Das Detektionslicht 5 durchläuft oder passiert die Optik 3, wobei das Reflexionslicht 7 um weitere Reflexionen bzw. Streuungen aus der Optik 3 ergänzt wird. Folglich gelangt gemeinsam mit dem Fluoreszenzlicht 6 um weitere Reflexionen bzw. Streuungen ergänzten Reflexionslicht 7 zum Detektor 8.

Im Gegensatz zu herkömmlichen optischen Einrichtungen ist zwischen dem Detektor 8 und einem die elektrischen Signale des Detektors 8 integrierenden bzw. aufaddierenden Integrator 9 ein Gate 10 vorgesehen, welches über ein Synchronisationssignal 11 unterschiedliche Signale in definierter zeitlicher Folge aus den gesamten Signalen, resultierend aus dem Detektionslicht, herausfiltern oder voneinander trennen kann. Jedenfalls ist das Gate 10 zu den Pulsen des Anregungslichts synchronisiert, wobei das Synchronisationssignal 11 direkt am Lasertreiber abgreifbar ist.

Zum Integrator 9 gelangen demnach nur noch die über das Gate 10 zugelassenen bzw. nicht herausgefilterten Signale, bei dem hier gewählten Ausführungsbeispiel eines konfokalen Fluoreszenzmikroskops nur noch die Fluoreszenzsignale, die im Integrator 9 aufaddiert und zur anschließenden Bilderzeugung 12 genutzt werden.

Hinsichtlich weiterer vorteilhafter Ausgestaltungen der Erfindung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehende Beschreibung der Erfindung lediglich zur Erörterung der beanspruchten Lehre dient, diese jedoch nicht auf die Beschreibung einschränkt.

### Bezugszeichenliste

- 1: Laserlicht
- 2: gepulster Laser
- 3: Optik
- 4: Probe, biologische Probe
- 5: Detektionslicht
- 6: Fluoreszenzlicht (Teil von 5)
- 7: Reflexionslicht (Teil von 5)
- 8: Detektor
- 9: Integrator
- 10: Gate, Gating
- 11: Synchronisationssignal
- 12: Bilderzeugung

## Patentansprüche

1. Verfahren zum Trennen von Detektionssignalen im Strahlengang einer optischen Einrichtung, wobei unterschiedliche Signale in definierter zeitlicher Folge entstehen, wobei auf Grundlage der bekannten oder ermittelbaren/feststellbaren zeitlichen Folge eine Unterdrückung oder Separierung von Signalen erfolgt und wobei es sich bei den Detektionssignalen um aus Fluoreszenzlicht (6) und Reflexionslicht/Streulicht (7) resultierende Signale handelt,
**dadurch gekennzeichnet, dass** auch Reflexionssignale aus dem Mikroskop unterdrückt oder separiert werden, dass das Fluoreszenzlicht und das Reflexionslicht auf einen Photon-Counting-Detektor treffen und aus dort auftreffenden Photonen resultierende elektrische Signale in einem nachgeschalteten Integrator aufintegriert bzw. aufaddiert und Bildpunkten zugeordnet werden, dass zwischen dem Photon-Counting-Detektor und dem Integrator die Reflexionssignale herausgefiltert werden, dass das Herausfiltern über ein Gate erfolgt, und dass ein Gating Signal auf einer Flanke eines Photon-Counting-Signals getriggert wird.

2. Verfahren nach Anspruch 1, wobei eine zur Emission von Fluoreszenzlicht geeignete Probe mit gepulstem Anregungslicht angeregt wird, wobei Fluoreszenzlicht aus der Probe emittiert und Reflexionslicht an der Probe und an bzw. in der Optik gestreut wird und wobei sowohl Fluoreszenzsignale als auch Reflexionssignale in einer zeitlich definierten Abfolge zum Puls des Anregungslichts entstehen, **dadurch gekennzeichnet, dass** die Trennung auf Grundlage der zeitlichen Abfolge der Signale, d.h. durch zeitliche Separierung, erfolgt.

3. Verfahren nach Anspruch 1 oder 2, **dadurch gekennzeichnet, dass** die Fluoreszenzsignale zu Messungen genutzt werden, beispielsweise im Rahmen der Fluoreszenz-Korrelations-Spektroskopie (FKS) oder der Fluoreszenz-Lebenszeit-Mikroskopie (FLIM-Technik) oder dass die Fluoreszenzsignale zur Bildgebung genutzt werden, insbesondere bei der vorzugsweise konfokalen Fluoreszenzmikroskopie.

4. Verfahren nach einem der Ansprüche 1 bis 3, **dadurch gekennzeichnet, dass** die Funktion des Gates zu den Pulsen des Anregungslichts synchronisiert ist.

5. Verfahren nach Anspruch 4, **dadurch gekennzeichnet, dass** zur Synchronisation ein direkt am Lasertreiber abgegriffenes oder ein über einen Detektor, vorzugsweise über eine schnelle Photodiode, am Anregungslicht ermitteltes Synchronisationssignal dient.

6. Verfahren nach Anspruch 4 oder 5, **dadurch gekennzeichnet, dass** das Gating-Signal auf das Fluoreszenzsignal zeitlich kalibriert wird.

7. Verfahren nach Anspruch 6, **dadurch gekennzeichnet, dass** die Kalibrierung des Gating-Signals durch Anpassung der Kabellänge zwischen Laser (Photodiode) und Gate (Weiche) erfolgt.

8. Verfahren nach Anspruch 6, **dadurch gekennzeichnet, dass** das Gating-Signal durch eine vorzugsweise variable elektronische Verzögerung des Synchronisationssignals kalibriert wird.

9. Verfahren nach Anspruch 8, **dadurch gekennzeichnet, dass** die elektronische Verzögerung des Synchronisationssignals mittels einer Software kalibriert wird.

10. Verfahren nach einem der Ansprüche 5 bis 9, **dadurch gekennzeichnet, dass** mindestens zwei Synchronisationssignale bereitgestellt werden, um mindestens zwei Detektoren mit unterschiedlichem Detektionslicht zu versorgen.

11. Verfahren nach einem der Ansprüche 1 bis 10, **dadurch gekennzeichnet, dass** als Lichtquelle eine alternierend pulsende Lichtquelle verwendet wird.

12. Verfahren nach einem der Ansprüche 1 bis 11 **dadurch gekennzeichnet, dass** als Lichtquelle eine Laserlichtquelle, insbesondere ein Weißlichtlaser, verwendet wird.

13. Verfahren nach einem der Ansprüche 1 bis 12, **dadurch gekennzeichnet, dass** mit mehreren definierten Laserlinien sequentiell oder simultan angeregt wird.

14. Verfahren nach einem der Ansprüche 1 bis 13, **dadurch gekennzeichnet, dass** als Detektor(en) Photon Counting Detektoren und Photomultiplier verwendet werden.

## Claims

1. Method for separating detection signals in the beam path of an optical device, wherein different signals are produced in a defined temporal sequence, wherein signals are suppressed or separated on the basis of the known or ascertainable/determinable temporal sequence, and wherein the detection signals are signals resulting from fluorescence light (6) and reflection light/scattered light (7), **characterized in that** reflection signals from the microscope are also suppressed or separated, **in that** the fluorescence light and the reflection light are incident on a photon counting detector and electrical signals resulting from photons that are incident there are integrated or summed up in a downstream integrator and assigned to image points, **in that** the reflection signals are filtered out between the photon counting detector and the integrator, **in that** the filtering is done via a gate, and that a gating signal is triggered on an edge of a photon counting signal.

2. Method according to Claim 1, wherein a sample that is suitable for emitting fluorescence light is excited with pulsed excitation light, wherein fluorescence light is emitted from the sample and reflection light is scattered at the sample and at or in the optical unit, and wherein both fluorescence signals and reflection signals are produced in a temporally defined sequence with respect to the pulse of the excitation light, **characterized in that** the separation is effected on the basis of the temporal sequence of the signals, that is to say on account of temporal separation.

3. Method according to Claim 1 or 2, **characterized in that** the fluorescence signals are used for measurements, for example as part of fluorescence correlation spectroscopy (FCS) or fluorescence lifetime microscopy (FLIM method) or **in that** the fluorescence signals are used for imaging, in particular in preferably confocal fluorescence microscopy.

4. Method according to one of Claims 1 to 3, **characterized in that** the function of the gate is synchronized with respect to the pulses of the excitation light.

5. Method according to Claim 4, **characterized in that**, for synchronization, a synchronization signal is used that has been tapped directly at the laser driver or ascertained on the basis of the excitation light via a detector, preferably a fast photodiode.

6. Method according to Claim 4 or 5, **characterized in that** the gating signal is temporally calibrated with respect to the fluorescence signal.

7. Method according to Claim 6, **characterized in that** the calibration of the gating signal is effected by adapting the cable length between the laser (photodiode) and the gate (switch).

8. Method according to Claim 6, **characterized in that** the gating signal is calibrated by way of a preferably variable electronic delay of the synchronization signal.

9. Method according to Claim 8, **characterized in that** the electronic delay of the synchronization signal is calibrated using software.

10. Method according to one of Claims 5 to 9, **characterized in that** at least two synchronization signals are provided to supply at least two detectors with different detection light.

11. Method according to one of Claims 1 to 10, **characterized in that** an alternatingly pulsing light source is used as a light source.

12. Method according to one of Claims 1 to 11, **characterized in that** a laser light source, in particular a white light laser, is used as a light source.

13. Method according to one of Claims 1 to 12, **characterized in that** excitation with a plurality of defined laser lines is effected sequentially or simultaneously.

14. Method according to one of Claims 1 to 13, **characterized in that** photon counting detectors and photomultipliers are used as detector(s).

## Revendications

1. Procédé de séparation de signaux de détection dans le chemin d'onde d'un dispositif optique, dans lequel différents signaux se produisent dans un ordre chronologique défini, dans lequel une suppression ou séparation des signaux s'effectue en fonction de l'ordre chronologique connu ou pouvant être déterminé/fixé et dans lequel les signaux de détection sont des signaux résultant de lumière fluorescente (6) et de lumière réfléchie/diffusée (7), **caractérisé en ce que** les signaux réfléchis sont supprimés ou séparés du microscope, **en ce que** la lumière fluorescente et la lumière réfléchie convergent sur un détecteur à comptage de photons, et des signaux électriques résultant des photons incidents sont intégrés ou additionnés et associés à des éléments d'image, **en ce que** les signaux réfléchis sont filtrés entre le détecteur à comptage de photons et l'intégrateur, **en ce que** le filtrage s'effectue par le biais d'une atténuation, et **en ce qu'**un signal de déclenchement est déclenché sur une pente d'un signal de comptage de photons.

2. Procédé selon la revendication 1, dans lequel une sonde adaptée à l'émission de lumière fluorescente est excitée avec une lumière d'excitation, dans lequel la lumière fluorescente est émise depuis la sonde et la lumière réfléchie est diffusée sur la sonde et sur ou dans l'optique et dans lequel aussi bien les signaux de fluorescence que les signaux réfléchis se produisent dans une séquence chronologique définie pour pulser la lumière d'excitation, **caractérisé en ce que** la séparation s'effectue en fonction de la séquence chronologique de signaux, à savoir par séparation temporelle.

3. Procédé selon la revendication 1 ou 2, **caractérisé en ce que** les signaux de fluorescence sont utilisés pour des mesures, par exemple dans le cadre de la spectroscopie de corrélation de fluorescence (SCF) ou de la microscopie de durée de vie de fluorescence (FLIM) ou **en ce que** les signaux de fluorescence sont utilisés pour de l'imagerie, en particulier dans la microscopie de fluorescence de préférence confocale.

4. Procédé selon l'une des revendications 1 à 3, **caractérisé en ce que** le fonctionnement de l'atténuation est synchronisé à la pulsation de la lumière d'excitation.

5. Procédé selon la revendication 4, **caractérisé en ce qu'**un signal de synchronisation, saisi directement sur la commande du laser ou déterminé sur la lumière d'excitation par le biais d'un détecteur, de préférence une photodiode rapide, est utilisé pour la synchronisation.

6. Procédé selon la revendication 4 ou 5, **caractérisé en ce que** le signal de déclenchement est étalonné temporellement sur le signal de fluorescence.

7. Procédé selon la revendication 6, **caractérisé en ce que** l'étalonnage du signal de déclenchement s'effectue par adaptation de la longueur du câble entre le laser (photodiode) et l'atténuation (séparateur).

8. Procédé selon la revendication 6, **caractérisé en ce que** le signal de déclenchement est étalonné par un décalage du signal de synchronisation, de préférence électroniquement variable.

9. Procédé selon la revendication 8, **caractérisé en ce que** le décalage électronique du signal de synchronisation est étalonné au moyen d'un logiciel.

10. Procédé selon l'une des revendications 5 à 9, **caractérisé en ce qu'**au moins deux signaux de synchronisation sont fournis, afin d'alimenter au moins deux détecteurs avec des lumières de détection différentes.

11. Procédé selon l'une des revendications 1 à 10, **caractérisé en ce qu'**une source de lumière pulsée alternante est utilisée comme source de lumière.

12. Procédé selon l'une des revendications 1 à 11, **caractérisé en ce qu'**une source de lumière laser, en particulier un laser à lumière blanche, est utilisée comme source de lumière.

13. Procédé selon l'une des revendications 1 à 12, **caractérisé en ce que** l'excitation se fait séquentiellement ou simultanément avec plusieurs lignes laser définies.

14. Procédé selon l'une des revendications 1 à 13, **caractérisé en ce que** des photomultiplicateurs et des détecteurs à comptage de photons sont utilisés comme détecteur(s).
